# EUROPEAN PATENT APPLICATION

(11) **EP 4 513 601 A1**
(43) Date of publication of application: **26.02.2025**
(21) Application number: 23819993.9
(22) Date of filing: 04.05.2023
(51) Int. Cl.: H01M 8/04119

(54) **MID-CASE OF HUMIDIFIER FOR FUEL CELL, AND HUMIDIFIER FOR FUEL CELL**

(30) Priority: 10.06.2022 KR 20220070465
(71) Applicant: Kolon Industries, Inc., Seoul 07793 (KR)
(72) Inventor: AHN, Woong Jeon, Seoul 07793 (KR); HER, Jung Kun, Seoul 07793 (KR); YANG, Hyoung Mo, Seoul 07793 (KR); KI, Sung Kwan, Seoul 07793 (KR)
(74) Representative: Vossius & Partner Patentanwälte Rechtsanwälte mbB
(86) International application number: PCT/KR2023/006087
(87) International publication number: WO 2023/239057

(57) **Abstract**

The present invention relates to a mid-case of a humidifier for a fuel cell, and to a humidifier for a fuel cell, the mid-case comprising: a mid-body accommodating at least one cartridge including a plurality of hollow fiber membranes; and a bypass portion which diverts a first gas introduced through a first gas inlet of a first cap and introduces the first gas toward the cartridge accommodated inside the mid-body, wherein the bypass portion protrudes from the mid-body at a position overlapping with respect to the cartridge accommodated inside the mid-body.

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC) .

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.
1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

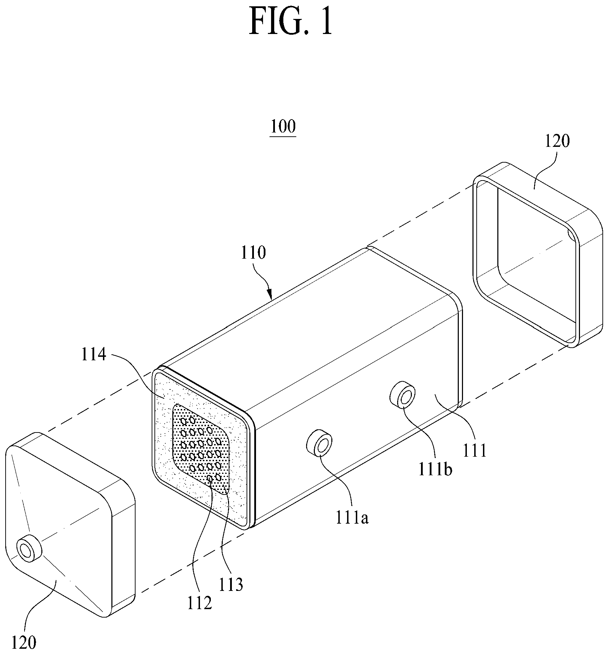

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a plurality of hollow fiber membranes 112 in the mid-case 111. Opposite ends of the hollow fiber membranes 112 are potted in fixing layers 113. In general, each of the fixing layers 113 is formed by hardening a liquid polymer, such as liquid polyurethane resin, using a casting method. The fixing layers 113, in which ends of the hollow fiber membranes 112 are potted, and resin layers 114 provided between the fixing layers 113 and the mid-case 111 isolate the inner spaces of the caps 120 from the inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membranes 112. Off-gas introduced into the mid-case 111 through the off-gas inlet 111a comes into contact with outer surfaces of the hollow fiber membranes 112, and is discharged from the mid-case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the hollows of the hollow fiber membranes 112.

In this case, conventionally, the off-gas introduced into the mid-case 111 flows toward the hollow fiber membranes 112. As a result, conventionally, there is a problem that the pressure of the off-gas introduced into the mid-case 111 is directly applied to the hollow fiber membranes 112, causing the hollow fiber membranes 112 to be damaged or broken.

### [Disclosure]

### [Technical Problem]

The present disclosure has been made in view of the above problems, and it is an object of the present disclosure to provide a mid-case of a humidifier for fuel cells and a humidifier for fuel cells capable of reducing damage to or breakage of hollow fiber membranes.

### [Technical Solution]

In order to accomplish the above object, the present disclosure may include the following constructions.

A mid-case of a humidifier for fuel cells according to the present disclosure is provided in a humidifier for fuel cells, the humidifier including a humidifying module configured to humidify dry gas to be supplied to a fuel cell stack using wet gas, a first cap coupled to one end of the humidifying module, and a second cap coupled to the other end of the humidifying module, and may include a mid body configured to receive at least one cartridge including a plurality of hollow fiber membranes and a bypass unit configured to bypass first gas introduced through a first gas inlet of the first cap so as to flow toward the cartridge received in the mid body. The bypass unit may protrude from the mid body at the position at which the bypass unit overlaps the cartridge received in the mid body.

A humidifier for fuel cells according to the present disclosure may include a humidifying module configured to humidify dry gas to be supplied to a fuel cell stack using wet gas, a first cap coupled to one end of the humidifying module, and a second cap coupled to the other end of the humidifying module. The humidification module may include a mid-case having open opposite ends and at least one cartridge including a plurality of hollow fiber membranes. The first cap may include a first gas inlet configured to allow first gas to be supplied into the mid-case to be introduced therethrough and a first port communicating with the hollow fiber membranes, the first port being configured to allow second gas to be introduced or discharged therethrough. The mid-case may include a mid body configured to receive the cartridge and a bypass unit configured to bypass the first gas introduced through the first gas inlet so as to flow toward the cartridge received in the mid body. The bypass unit may protrude from the mid body at the position at which the bypass unit overlaps the cartridge received in the mid body.

### [Advantageous Effects]

The present disclosure is capable of reducing the risk of damage to or breakage of hollow fiber membranes due to gas pressure. Consequently, the present disclosure is capable of extending service life and reducing maintenance costs.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIGs. 5 and 6 are schematic plan views of a cartridge of the humidifier for fuel cells according to the present disclosure.
FIG. 7 is a schematic side sectional view showing that first gas introduced into a mid-case through a first gas inlet directly flows toward the cartridge.
FIG. 8 is a schematic perspective view of the humidifier for fuel cells according to the present disclosure including a bypass unit.
FIG. 9 is a schematic partial sectional view taken along line II-II of FIG. 8.
FIG. 10 is a schematic exploded perspective view of a mid-case having a bypass unit and a first cap having a first gas inlet in the humidifier for fuel cells according to the present disclosure.
FIG. 11 is experimental results of measurement of humidification efficiency and shell differential pressure by changing the sectional area of a first bypass passage.

### [Best Mode]

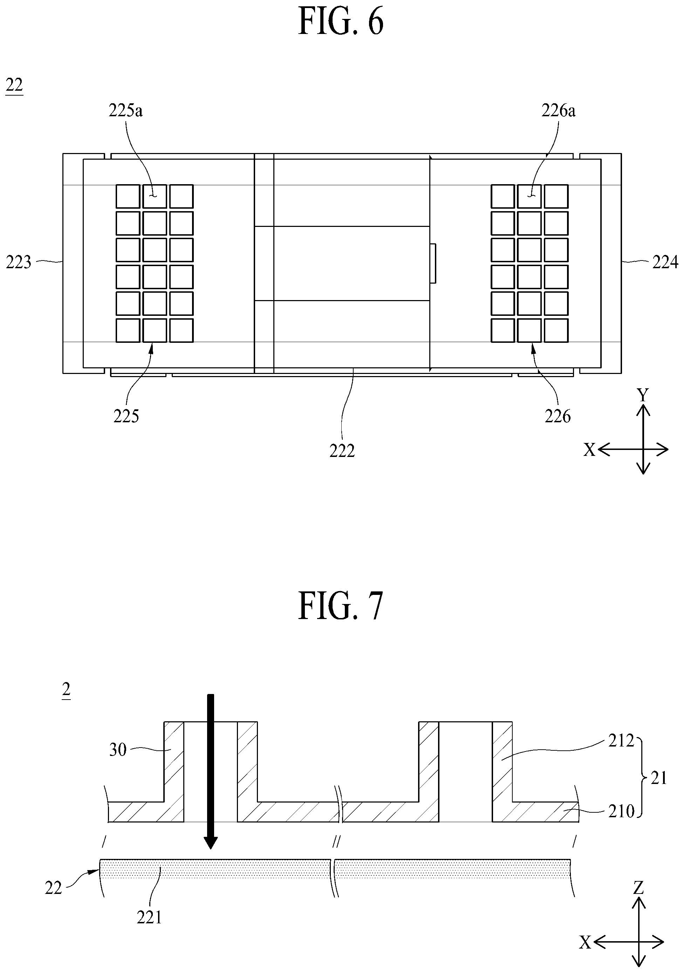

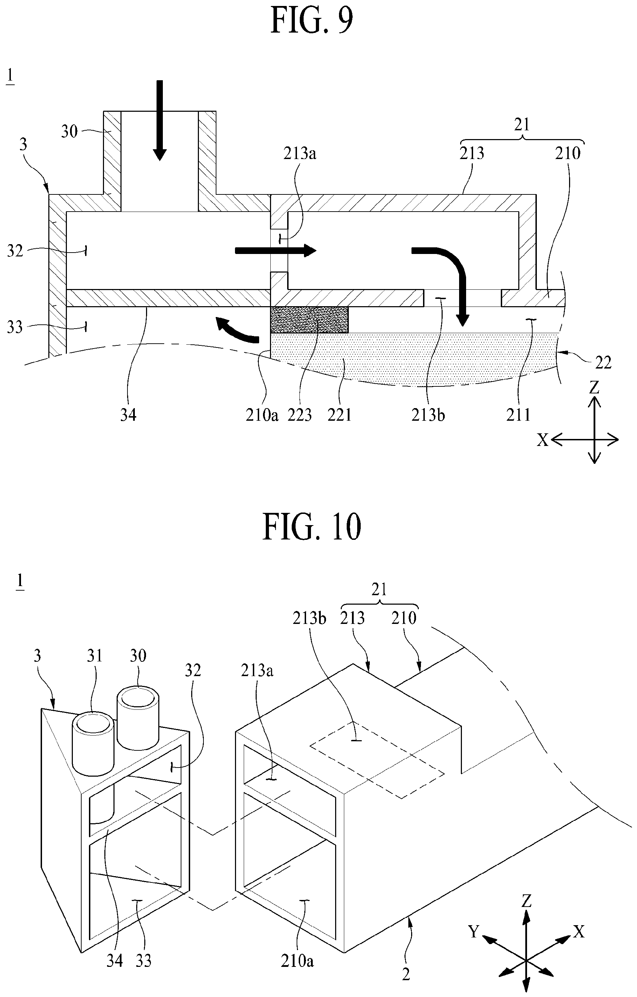

Hereinafter, an embodiment of a humidifier for fuel cells according to the present disclosure will be described in detail with reference to the accompanying drawings. A mid-case of a humidifier for fuel cells according to the present disclosure may be included in a humidifier for fuel cells according to the present disclosure, and therefore the cartridge of the humidifier for fuel cells according to the present disclosure will also be described while the humidifier for fuel cells according to the present disclosure is described. Meanwhile, in FIG. 7, two parallel curved lines are omission lines. Also, in FIGs. 7 and 9, hollow fiber membranes are simply shown by hatching and an inner case is omitted.

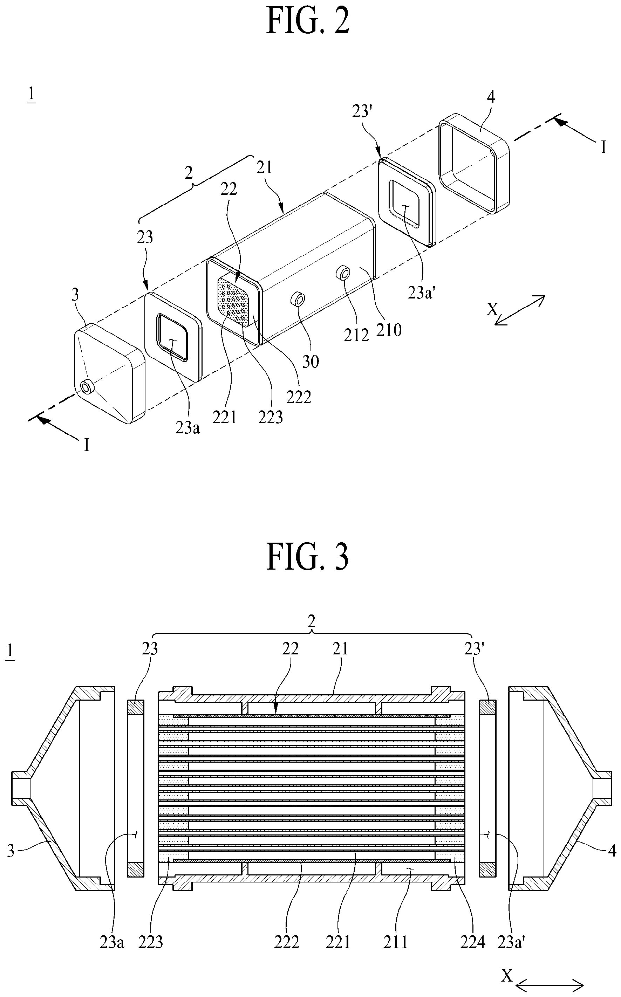

Referring to FIGs. 2 to 4, a humidifier 1 for fuel cells according to the present disclosure is configured to humidify dry gas to be supplied to a fuel cell stack (not shown) using wet gas. The wet gas may be discharged from the fuel cell stack. The dry gas may be fuel gas or air. The dry gas may be humidified by the wet gas, and may be supplied to the fuel cell stack. The humidifier 1 for fuel cells according to the present disclosure includes a humidifying module 2 configured to humidify dry gas, a first cap 3 coupled to one end of the humidifying module 2, and a second cap 4 coupled to the other end of the humidifying module 2.

Referring to FIGs. 2 to 4, the humidifying module 2 humidifies dry gas. The first cap 3 may be coupled to one end of the humidifying module 2. The second cap 4 may be coupled to the other end of the humidifying module 2. The humidifying module 2 may supply humidified dry gas to the fuel cell stack using first gas and second gas. When the first gas is dry gas, the second gas may be wet gas. In this case, the first gas may be humidified by the second gas and may then be supplied to the fuel cell stack. When the first gas is wet gas, the second gas may be dry gas. In this case, the second gas may be humidified by the first gas and may then be supplied to the fuel cell stack.

The humidifying module 2 includes a mid-case 21 and at least one cartridge 22.

The cartridge 22 is coupled to the mid-case 21. The cartridge 22 may be disposed in the mid-case 21. Opposite ends of the mid-case 21 are open. In this case, a receiving hole 211 may be formed in the mid-case 21. The receiving hole 211 may be formed so as to extend through the mid-case 21 in a first axis direction (X-axis direction). At least one cartridge 22 may be disposed in the receiving hole 211.

The mid-case 21 may include a mid body 210. The cartridge 22 is received in the mid body 210. The cartridge 22 may be disposed in the mid body 210 so as to be received in the mid body 210. At least one cartridge 22 may be received in the mid body 210. The receiving hole 211 may be formed through the mid body 210 in the first axis direction (X-axis direction).

A first gas inlet 30 and a first gas outlet 212 may be formed in the mid-case 21. The first gas inlet 30 may introduce the first gas into the mid-case 21. The first gas outlet 212 may discharge the first gas from the mid-case 21. In this case, the first gas outlet 212 may discharge the first gas discharged from the cartridge 22 to the outside of the mid body 210.

The cartridge 22 is disposed in the mid-case 21. The cartridge 22 includes a plurality of hollow fiber membranes 221. The hollow fiber membranes 221 may be coupled to the cartridge 22 so as to be modularized. Consequently, the hollow fiber membranes 221 may be installed in the mid-case 21 through a process of coupling the cartridge 22 to the mid-case 21. In the humidifier 1 for fuel cells according to the present disclosure, therefore, ease in installation, separation, and replacement of the hollow fiber membranes 221 may be improved.

The cartridge 22 may include an inner case 222.

The inner case 222 has openings formed at opposite ends, and receives the hollow fiber membranes 221. The hollow fiber membranes 221 may be disposed in the inner case 222 so as to be modularized. Each of the hollow fiber membranes 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first fixing layer 223. The first fixing layer 223 is configured to fix one end of each of the hollow fiber membranes 221. The first fixing layer 223 may close the opening formed in one end of the inner case 222. In this case, the first fixing layer 223 may be formed so as not to block hollows of the hollow fiber membranes 221. The first fixing layer 223 may be formed by hardening a liquid resin, such as liquid polyurethane resin, through a casting process. A part of the first fixing layer 223 may be located in the inner case 222, and the remaining part of the first fixing layer may protrude outward from the inner case 222. The first fixing layer 223 may fix one end of each of the hollow fiber membranes 221 to the inner case 222.

The cartridge 22 may include a second fixing layer 224. The second fixing layer 224 is configured to fix the other end of each of the hollow fiber membranes 221. The second fixing layer 224 may close the opening formed in the other end of the inner case 222. In this case, the second fixing layer 224 may be formed so as not to block the hollows of the hollow fiber membranes 221. The second fixing layer 224 may be formed by hardening a liquid resin, such as liquid polyurethane resin, through a casting process. A part of the second fixing layer 224 may be located in the inner case 222, and the remaining part of the second fixing layer may protrude outward from the inner case 222. The second fixing layer 224 may fix the other end of each of the hollow fiber membranes 221 to the inner case 222. Since the second fixed layer 224 and the first fixed layer 223 are formed so as not to block the hollows of the hollow fiber membranes 221, the second gas may be supplied to the hollows of the hollow fiber membranes 221 without obstruction by the second fixed layer 224 and the first fixed layer 223, and may be discharged from the hollows of the hollow fiber membranes 221 without obstruction by the second fixed layer 224 and the first fixed layer 223.

Referring to FIGs. 2 to 6, the cartridge 22 may include a second gas inlet 225 and a second gas outlet 226.

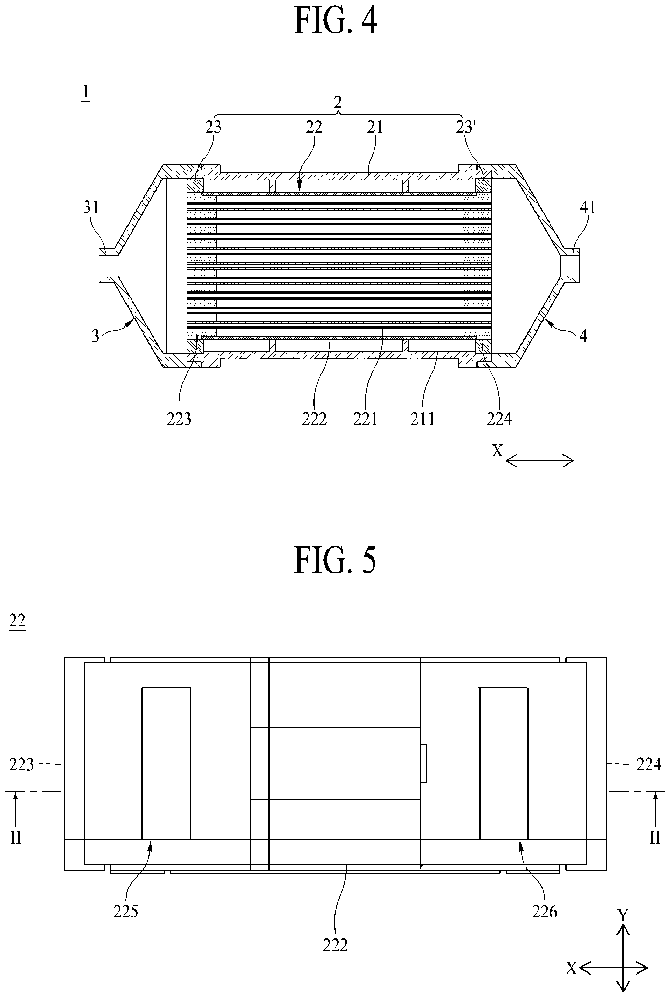

The second gas inlet 225 is formed at the inner case 222. The second gas inlet 225 may be formed at one side of the inner case 222. One side of the inner case 222 may be disposed so as to face any one of the side walls of the mid body 210. The second gas inlet 225 may introduce the first gas into the inner case 222. The second gas inlet 225 may be formed through the inner case 222. As shown in FIG. 5, the second gas inlet 225 may be implemented by one through-hole formed through the inner case 222. As shown in FIG. 6, the second gas inlet 225 may be implemented by a plurality of through-holes formed through the inner case 222. In this case, the second gas inlet 225 may include a plurality of inflow windows 225a formed through different parts of the inner case 222. The inflow windows 225a may be disposed spaced apart from each other in the first axis direction (X-axis direction) and a second axis direction (Y-axis direction) so as to form a matrix. The second axis direction (Y-axis direction) is an axial direction perpendicular to the first axis direction (X-axis direction).

The second gas outlet 226 is formed at the inner case 222. The second gas outlet 226 may be formed at one side of the inner case 222. The second gas outlet 226 may discharge the first gas from the inner case 222. The second gas outlet 226 may be formed through the inner case 222. As shown in FIG. 5, the second gas outlet 226 may be implemented by one through-hole formed through the inner case 222. As shown in FIG. 6, the second gas outlet 226 may be implemented by a plurality of through-holes formed through the inner case 222. In this case, the second gas outlet 226 may include a plurality of outflow windows 226a formed through different parts of the inner case 222. The outflow windows 226a may be disposed spaced apart from each other in the first axis direction (X-axis direction) and the second axis direction (Y-axis direction) so as to form a matrix. The second gas outlet 226 and the second gas inlet 225 may be disposed spaced apart from each other in the first axis direction (X-axis direction).

When the first gas is wet gas, the first gas may be supplied to a space between an inner surface of the mid-case 21 and an outer surface of the cartridge 22 through the first gas inlet 30, may be supplied into the cartridge 22 through the second gas inlet 225, and may come into contact with outer surfaces of the hollow fiber membranes 221. During this process, moisture contained in the first gas may be transmitted through the hollow fiber membranes 221 to humidify second gas flowing along the hollows of the hollow fiber membranes 221. The humidified second gas may be discharged from the hollow fiber membranes 221, and may then be supplied to the fuel cell stack through the first cap 3 or the second cap 4. After humidifying the second gas, the first gas may be discharged to the space between the outer surface of the cartridge 22 and the inner surface of the mid-case 21 through the second gas outlet 226, and may be discharged from the mid-case 21 through the first gas outlet 212. In this case, the first gas may be off-gas discharged from the fuel cell stack.

When the first gas is dry gas, the first gas may be supplied to the space between the inner surface of the mid-case 21 and the outer surface of the cartridge 22 through the first gas inlet 30, may be supplied into the cartridge 22 through the second gas inlet 225, and may come into contact with the outer surfaces of the hollow fiber membranes 221. During this process, moisture contained in the second gas flowing along the hollows of the hollow fiber membranes 221 may be transmitted through the hollow fiber membranes 221 to humidify the first gas introduced into the cartridge 22. The humidified first gas may be discharged to the space between the outer surface of the cartridge 22 and the inner surface of the mid-case 21 through the second gas outlet 226, may be discharged from the mid-case 21 through the first gas outlet 212, and may be supplied to the fuel cell stack. After humidifying the first gas, the second gas may be discharged from the hollow fiber membranes 221, and may then be discharged to the outside through the first cap 3 or the second cap 4. In this case, the second gas may be off-gas discharged from the fuel cell stack.

The humidifying module 2 may include a plurality of packing members 23 and 23'.

The packing members 23 and 23' form a hermetic seal between the cartridge 22 and the mid-case 21 in order to prevent direct mixing between the first gas and the second gas. The packing members 23 and 23' may be inserted between the cartridge 22 and the mid-case 21. In this case, the cartridge 22 may be inserted through first through-holes 23a and 23a' formed respectively in the packing members 23 and 23'. The packing members 23 and 23' may be disposed respectively at opposite sides of the cartridge 22. Although not shown, resin layers may be formed respectively at the opposite sides of the cartridge 22 instead of the packing members 23 and 23'. Each of the resin layers may be formed by hardening a liquid polymer, such as liquid polyurethane resin, using a casting method.

Referring to FIGs. 2 to 4, the first cap 3 is coupled to one end of the humidifying module 2. A space between the first cap 3 and the cartridge 22 may be isolated from the space between the cartridge 22 and the mid-case 21 in a hermetically sealed state by the packing member 23 or the resin layer. The first cap 3 may include a first port 31. The first port 31 is configured to allow the second gas to flow therethrough. The first port 31 may communicate with the hollow fiber membranes 221. In the process of the second gas flowing between the first cap 3 and the hollow fiber membranes 221, therefore, the second gas may be introduced or discharged through the first port 31.

Referring to FIGs. 2 to 4, the second cap 4 is coupled to the other end of the humidifying module 2. The second cap 4 may be coupled to the other end of the humidifying module 2 so as to be spaced apart from the first cap 3 in the first axis direction (X-axis direction). A space between the second cap 4 and the cartridge 22 may be isolated from the space between the cartridge 22 and the mid-case 21 in a hermetically sealed state by the packing member 23' or the resin layer. The second cap 4 may include a second port 41. The second port 41 is configured to allow the second gas to flow therethrough. The second port 41 may communicate with the hollow fiber membranes 221. In the process of the second gas flowing between the second cap 4 and the hollow fiber membranes 221, therefore, the second gas may be introduced or discharged through the second port 41. When the second gas is introduced through the second port 41, the second gas may be discharged through the first port 31. In this case, the second gas may exchange moisture with the first gas while sequentially passing through the second cap 4, the hollows of the hollow fiber membranes 221, and the first cap 3. When the second gas is discharged through the second port 41, the second gas may be introduced through the first port 31. In this case, the second gas may exchange moisture with the first gas while sequentially passing through the first cap 3, the hollows of the hollow fiber membranes 221, and the second cap 4.

Here, when the first gas introduced into the mid-case 21 through the first gas inlet 30 flows directly toward the cartridge 22, as shown in FIG. 7, there is the risk of the hollow fiber membrane 221 being damaged or broken due to the pressure of the first gas. In order to avoid this, the humidifier 1 for fuel cells according to the present disclosure may be implemented such that the first gas introduced through the first gas inlet 30 bypasses and flows toward the cartridge 22. To this end, in the humidifier 1 for fuel cells according to the present disclosure, the mid-case 21 and the first cap 3 may be implemented as follows.

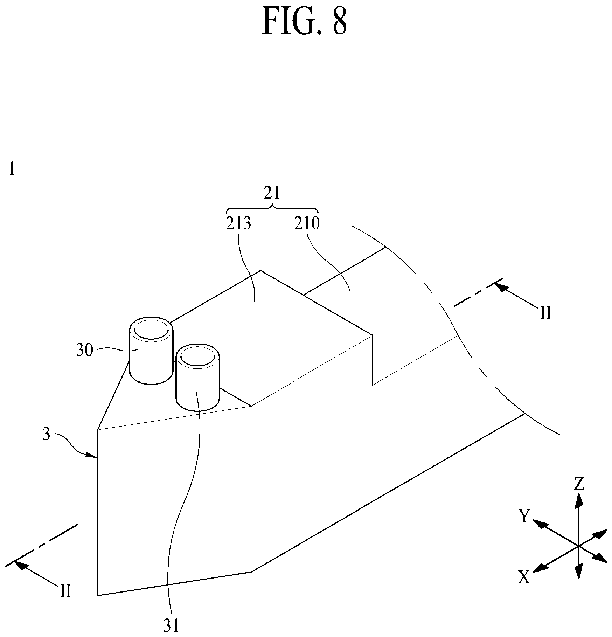

Referring to FIGs. 2 to 10, the mid-case 21 may include a bypass unit 213.

The bypass unit 213 is configured to bypass the first gas introduced through the first gas inlet 30 so as to flow toward the cartridge 22 received in the mid body 210. The bypass unit 213 may be connected to the interior of the first cap 3 and the interior of the mid body 210 so as to communicate therewith. In this case, the first cap 3 may include the first gas inlet 30. Accordingly, the bypass unit 213 may communicate with the first gas inlet 30 via the interior of the first cap 3. Consequently, the first gas introduced through the first gas inlet 30 may bypass along the bypass unit 213 and flow toward the cartridge 22 received in the mid body 210.

The humidifier 1 for fuel cells according to the present disclosure may reduce the pressure of the first gas flowing toward the cartridge 22 by bypassing the first gas using the bypass unit 213, as described above. Accordingly, the humidifier 1 for fuel cells according to the present disclosure may reduce the risk of damage to or breakage of the hollow fiber membranes 221 due to the pressure of the first gas introduced into the mid body 210. Consequently, the humidifier 1 for fuel cells according to the present disclosure may extend the service life of the hollow fiber membranes 221, thereby reducing maintenance costs, operation costs, and the like. In addition, the humidifier 1 for fuel cells according to the present disclosure may increase the maintenance interval for the hollow fiber membranes 221, thereby contributing to increase in the operation rate of the fuel cell stack.

The bypass unit 213 may protrude from the mid body 210. Accordingly, the humidifier 1 for fuel cells according to the present disclosure may implement a flow channel for bypassing the first gas outside the mid body 210 using the bypass unit 213. Consequently, the humidifier 1 for fuel cells according to the present disclosure may be implemented such that a flow path for bypassing the first gas using the bypass unit 213 and a flow path of the first gas flowing between the interior of the mid body 210 and the outside of the cartridge 22 do not interfere with each other. Accordingly, the humidifier 1 for fuel cells according to the present disclosure is implemented such that the flow path of the first gas flowing between the interior of the mid body 210 and the outside of the cartridge 22 is not narrowed due to the flow path for bypassing the first gas. Consequently, the humidifier 1 for fuel cells according to the present disclosure may be implemented such that the pressure of the first gas applied to the hollow fiber membranes 221 can be reduced and at the same time moisture exchange between the first gas and the second gas can be facilitated.

The bypass unit 213 may be disposed so as to overlap the cartridge 22 received in the mid body 210. One end of the bypass unit 213 may be connected to the interior of the first cap 3 disposed at one end of the mid body 210 so as to communicate therewith. The other end of the bypass unit 213 may be connected to the interior of the mid body 210 so as to communicate therewith. In this case, the other end of the bypass unit 213 may be disposed so as to overlap the cartridge 22 received in the mid body 210. Accordingly, since the first end of the bypass unit 213 and the other end of the bypass unit 213 are disposed spaced apart from each other, the humidifier 1 for fuel cells according to the present disclosure may be implemented such that the pressure of the first gas gradually decreases as the first gas flows from one end of the bypass unit 213 to the other end of the bypass unit 213. In this case, as the flow velocity of the first gas gradually decreases, the pressure of the first gas applied to the hollow fiber membranes 221 may be reduced. Consequently, the humidifier 1 for fuel cells according to the present disclosure may be implemented such that the first gas can flow smoothly toward the cartridge 22 via the bypass unit 213 by preventing an abrupt change in the pressure of the first gas. One end of the bypass unit 213 and the other end of the bypass unit 213 may be disposed at positions spaced apart from each other in the first axis direction (X-axis direction).

The bypass unit 213 may include a first bypass passage 213a and a second bypass passage 213b.

The first bypass passage 213a communicates with the interior of the first cap 3. The first bypass passage 213a may function as an inlet through which the first gas is introduced into the bypass unit 213. The first bypass passage 213a may be formed through one end of the bypass unit 213.

The second bypass passage 213b communicates with the interior of the mid body 210. The second bypass passage 213b may function as an outlet through which the first gas is discharged from the bypass unit 213. The second bypass passage 213b may be formed through the other end of the bypass unit 213.

The second bypass passage 213b and the first bypass passage 213a may be formed through the bypass unit 213 at different positions in different directions. For example, based on FIG. 9, the second bypass passage 213b may be formed through the bypass unit 213 in a downward direction from the other end of the bypass unit 213 to the mid body 210. In this case, the first bypass passage 213a may be formed through the bypass unit 213 in a leftward direction from one end of the bypass unit 213 to the first cap 3. Accordingly, the first gas may be introduced through the first bypass passage 213a, may flow in the first axis direction (X-axis direction), and may be discharged through the second bypass passage 213b in the downward direction, whereby the first gas may flow into the mid body 210. Consequently, the humidifier 1 for fuel cells according to the present disclosure may be implemented such that the flow direction is changed in the process of flowing from the bypass passage 213 to the interior of the mid body 210, thereby further reducing the pressure of the first gas applied to the hollow fiber membranes 221. Meanwhile, the second bypass passage 213b may be formed through the other end of the bypass unit 213 and the mid body 210. Accordingly, the interior of the bypass unit 213 and the interior of the mid body 210 may be connected to each other so as to communicate with each other via the second bypass passage 213b. The bypass unit 213 and the mid body 210 may be integrally formed.

The mid-case 21 may include a first mid passage 210a.

The first mid passage 210a communicates with the interior of the first cap 3. The first mid passage 210a may function as a passage through which the second gas is introduced or discharged between the interior of the first cap 3 and the hollow fiber membranes 221. The first mid passage 210a may be formed through one end of the mid body 210. The first mid passage 210a may correspond to one end of the receiving hole 211. One end of each of the hollow fiber membranes 221 fixed by the first fixing layer 223 may be disposed in the first mid passage 210a.

The mid-case 21 may include a second mid passage (not shown).

The second mid passage may function as a passage through which the second gas is introduced or discharged between the interior of the second cap 4 and the hollow fiber membranes 221. The second mid passage may be formed through the other end of the mid body 210. The second mid passage may correspond to the other end of the receiving hole 211. The other end of each of the hollow fiber membranes 221 fixed by the second fixing layer 224 may be disposed in the second mid passage.

Here, each of the first mid passage 210a and the first bypass passage 213a may be implemented to have the following sectional area. In this case, the sectional area relates to an area at which each of the first mid passage 210a and the first bypass passage 213a can allow fluid to pass therethrough. The sectional area of each of the first mid passage 210a and the first bypass passage 213a is the area of a section in an upward-downward direction (Z-axis direction). The upward-downward direction (Z-axis direction) may be an axial direction perpendicular to each of the first axis direction (X-axis direction) and the second axis direction (Y-axis direction). The upward-downward direction (Z-axis direction) may also be an axial direction parallel to the second axis direction (Y-axis direction). In this case, the cartridge 22 may be disposed so as to face in a direction other than the direction in which the second gas inlet 225 and the second gas outlet 226 face the second bypass passage 213b. The first mid passage 210a and the first bypass passage 213a may be disposed spaced apart from each other in the upward-downward direction (Z-axis direction).

First, the sectional area of the first mid passage 210a may be implemented to be greater than the sectional area of the first bypass passage 213a. In Comparative Example 1, wherein the sectional area of the first bypass passage 213a is implemented to be greater than the sectional area of the first mid passage 210a or to be equal to the sectional area of the first mid passage 210a, the flow velocity of the first gas introduced into the bypass unit 213 via the first bypass passage 213a becomes too low. Accordingly, in Comparative Example 1, the first gas cannot be delivered to the hollow fiber membranes 221 disposed relatively inwardly, among the hollow fiber membranes 221 in the cartridge 22, whereby humidification efficiency may be reduced. In order to prevent this, the humidifier 1 for fuel cells according to the present disclosure may be implemented such that the sectional area of the first bypass passage 213a is less than the sectional area of the first mid passage 210a. Accordingly, the humidifier 1 for fuel cells according to the present disclosure may increase the flow velocity of the first gas introduced into the bypass unit 213 via the first bypass passage 213a when compared to Comparative Example 1, whereby it is possible to increase the proportion of the hollow fiber membranes 221 involved in humidification, among the hollow fiber membranes 221 in the cartridge 22. Consequently, the humidifier 1 for fuel cells according to the present disclosure may have more improved humidification efficiency than Comparative Example 1.

Next, assuming that the sectional area of the first mid passage 210a is 1, the sectional area of the first bypass passage 213a may be implemented to be 0.1 to 0.45. That is, the ratio of the sectional area of the first bypass passage 213a to the sectional area of the first mid passage 210a may be 10% to 45%. Accordingly, the humidifier 1 for fuel cells according to the present disclosure may be implemented to have humidification efficiency and shell differential pressure within a predetermined range. The shell differential pressure relates to the pressure acting on the interior of the mid-case 21 and the interior of the cartridge 22 in the process in which the first gas is introduced through the first gas inlet 30 and is discharged through the first gas outlet 212. If the shell differential pressure is too high, there is the risk of damage to or breakage of the mid-case 21, the cartridge 22, and the hollow fiber membranes 221. If the shell differential pressure is too low, the residence time of the first gas in the mid-case 21 and the cartridge 22 may be too short, resulting in low humidification efficiency.

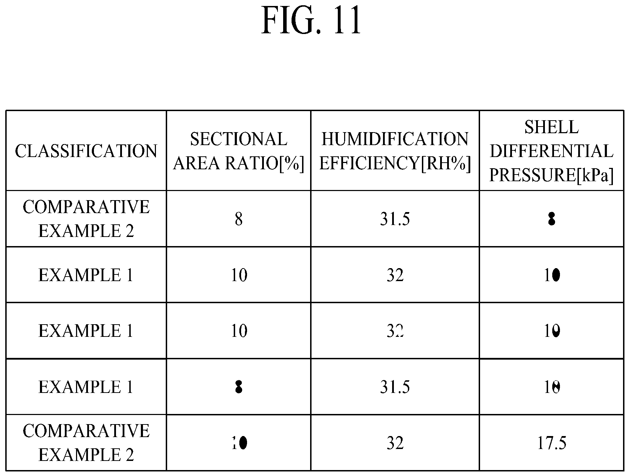

Referring to FIGs. 2 to 11, it can be seen from the experimental results of FIG. 11 that, when the sectional area of the first bypass passage 213a is 10% to 45% of the sectional area of the first mid passage 210a, the humidifier is implemented to have humidification efficiency and shell differential pressure within the predetermined range. FIG. 11 is experimental results of measurement of humidification efficiency and shell differential pressure by changing only the sectional area of the first bypass passage 213a while not changing the sectional area of the first mid passage 210a and the sectional area of the second bypass passage 213b. All of the experimental results in FIG. 11 are the results of measurement of humidification efficiency and shell differential pressure when the same flow rate of first gas is supplied through the first gas inlet 30 while the sectional area of the second bypass passage 213a is implemented to be 60% of the sectional area of the first mid passage 210a. Also, in FIG. 11, the sectional area ratio refers to the ratio of the sectional area of the first bypass passage 213a to the sectional area of the first mid passage 210a.

As can be seen from FIG. 11, Example 1 is implemented such that the ratio of the sectional area of the first bypass passage 213a to the sectional area of the first mid passage 210a is 10%, whereby the humidification efficiency is 32 RH% and the shell differential pressure is 21 kPa. Example 2 is implemented such that the ratio of the sectional area of the first bypass passage 213a to the sectional area of the first mid passage 210a is 30%, whereby the humidification efficiency is 30 RH% and the shell differential pressure is 19 kPa. Example 3 is implemented such that the ratio of the sectional area of the first bypass passage 213a to the sectional area of the first mid passage 210a is 10%, whereby the humidification efficiency is 32 RH% and the shell differential pressure is 21 kPa. As such, it can be seen that Example 1 to Example 3 are implemented such that the ratio of the sectional area of the first bypass passage 213a to the sectional area of the first mid passage 210a is 10% to 45%, whereby the humidification efficiency is 30 to 32 RH% and the shell differential pressure is 18 to 21 kPa.

Comparative Example 2 is implemented such that the ratio of the sectional area of the first bypass passage 213a to the sectional area of the first mid passage 210a is 8%, whereby the humidification efficiency is 31.5 RH%, but the shell differential pressure is 32 kPa, which is significantly higher than in Example 1 to Example 3. It can be seen from Comparative Example 2 that, when the ratio of the sectional area of the first bypass passage 213a to the sectional area of the first mid passage 210a is implemented to be less than 10%, the shell differential pressure is significantly increased, which increases the risk of damage to the mid-case 21, the cartridge 22, and the hollow-fiber membranes 221.

In addition, Comparative Example 3 is implemented such that the ratio of the sectional area of the first bypass passage 213a to the sectional area of the first mid passage 210a is 47%, whereby the shell differential pressure is 17.5 kPa, but the humidification efficiency is 22 RH%, which is significantly lower than in Example 1 to Example 3. It can be seen from Comparative Example 3 that, the ratio of the sectional area of the first bypass passage 213a to the sectional area of the first mid passage 210a is implemented to be greater than 45%, humidification efficiency is significantly lowered.

As such, it can be seen that the humidifier 1 for fuel cells according to the present disclosure is implemented such that the ratio of the sectional area of the first bypass passage 213a to the sectional area of the first mid passage 210a is 10% to 45%, whereby the humidification efficiency is 30 to 32 RH% and the shell differential pressure is 18 to 21 kPa. Consequently, the humidifier 1 for fuel cells according to the present disclosure may reduce the risk of damage to or breakage of the mid-case, the cartridge 22, and the hollow fiber membranes 221 and at the same time improving humidification efficiency, thereby contributing to further improvement in the performance of the fuel cell system.

Meanwhile, the sectional area of the second bypass passage 213b may be implemented to be greater than the sectional area of the first bypass passage 213a. In this case, the sectional area of the second bypass passage 213b is the area of a section in the first axis direction (X-axis direction). In Comparative Example 4, wherein the sectional area of the second bypass passage 213b is implemented to be less than the sectional area of the first bypass passage 213a or to be equal to the sectional area of the first bypass passage 213a, the flow velocity of the first gas introduced into the mid body 210 via the second bypass passage 213b becomes too high. Accordingly, in Comparative Example 4, the pressure of the first gas applied to the hollow fiber membranes 221 may be excessively increased, thereby increasing the risk of damage to or breakage of the hollow fiber membranes 221. In order to prevent this, the humidifier 1 for fuel cells according to the present disclosure may be implemented such that the sectional area of the second bypass passage 213b is greater than the sectional area of the first bypass passage 213a. Accordingly, the humidifier 1 for fuel cells according to the present disclosure may reduce the flow velocity of the first gas introduced into the mid body 210 via the second bypass passage 213b when compared to Comparative Example 4, thereby reducing the risk of damage to or breakage of the hollow fiber membranes 221 due to the pressure of the first gas.

Meanwhile, assuming that the sectional area of the first mid passage 210a is 1, the sectional area of the second bypass passage 213b may be implemented to be 0.2 to 0.8. That is, the ratio of the sectional area of the second bypass passage 213b to the sectional area of the first mid passage 210a may be 20% to 80%. Accordingly, the humidifier 1 for fuel cells according to the present disclosure may be implemented to have humidification efficiency and shell differential pressure within a predetermined range. In Comparative Example 5, wherein the ratio of the sectional area of the second bypass passage 213b to the sectional area of the first mid passage 210a is implemented to be less than 20%, the flow velocity of the first gas introduced into the mid body 210 via the second bypass passage 213b becomes too high, thereby increasing the risk of damage to or breakage of the hollow fiber membranes 221. In Comparative Example 6, wherein the ratio of the sectional area of the second bypass passage 213b to the sectional area of the first mid passage 210a is implemented to be greater than 80%, the flow velocity of the first gas introduced into the mid body 210 via the second bypass passage 213b becomes too low, and therefore the first gas cannot be delivered to the hollow fiber membranes 221 disposed relatively inwardly, among the hollow fiber membranes 221, thereby reducing humidification efficiency. In consideration of this, the ratio of the sectional area of the second bypass passage 213b to the sectional area of the first mid passage 210a is implemented to be 20% to 80%, and therefore the humidifier 1 for fuel cells according to the present disclosure may reduce the risk of damage to or breakage of the hollow-fiber membranes 221 and at the same time improving humidification efficiency, thereby contributing to further improving the performance of the fuel cell system through. Even if the ratio of the sectional area of the second bypass passage 213b relative to the sectional area of the first mid passage 210a is 20% to 80%, the sectional area of the second bypass passage 213b may be implemented to be greater than the sectional area of the first bypass passage 213a.

Referring to FIGs. 1 to 10, the first cap 3 may include the first gas inlet 30, a first communication channel 32, a second communication channel 33, and a compartment portion 34.

The first gas inlet 30 allows the first gas to be supplied into the mid-case 21 therethrough. The first gas inlet 30 may be coupled to the first cap 3 so as to communicate with the interior of the first cap 3. When compared to a comparative example in which the first gas inlet 30 is disposed in the mid-case 21, an example in which the first gas inlet 30 is disposed in the first cap 3 may reduce the distance between the first gas inlet 30 and a supply source (not shown) of the first gas. Accordingly, the example in which the first gas inlet 30 is disposed in the first cap 3 may reduce the length of a hose configured to connect the first gas inlet 30 and the supply source to each other, thereby contributing to overall miniaturization of the fuel cell system. In addition, the example in which the first gas inlet 30 is disposed in the first cap 3 may implement the hose configured to connect the first gas inlet 30 and the supply source to each other as a straight line, thereby contributing to further miniaturization of the fuel cell system. The source may be the fuel cell stack. In this case, the first gas may be off-gas discharged from the fuel cell stack.

The first gas inlet 30 may protrude from the first cap 3. The first gas inlet 30 and the first port 31 may protrude in the same direction. Based on FIG. 10, the first gas inlet 30 and the first port 31 may protrude from an upper surface of the first cap 3 in an upward direction. When the first gas is off-gas discharged from the fuel cell stack and the second gas is humidified gas to be supplied to the fuel cell stack, both the first gas inlet 30 and the first port 31 may be connected to the fuel cell stack. In this case, the first port 31 may supply second gas humidified by the first gas to the fuel cell stack. Consequently, the humidifier 1 for fuel cells according to the present disclosure may improve the ease of operation of connecting the first gas inlet 30 and the first port 31 to the fuel cell stack. In addition, the humidifier 1 for fuel cells according to the present disclosure may reduce the length of a hose configured to connect the first gas inlet 30 and the first port 31 to the fuel cell stack, thereby contributing to further miniaturization of the fuel cell system. Meanwhile, the first gas outlet 212 may protrude from the mid body 210. The first gas outlet 212 and the first gas inlet 30 may protrude in the same direction. The first gas outlet 212 and the first gas inlet 30 may protrude in different directions.

The first communication channel 32 allows the first gas inlet 30 and the bypass unit 213 to communicate with each other therethrough. The first communication channel 32 may be disposed in the first cap 3. The first communication channel 32 may be formed through one end of the first cap 3. One end of the first cap 3 is the part facing one end of the mid-case 21. When the first cap 3 is coupled to the mid-case 21, the first communication 32 may be coupled to the first bypass passage 213a so as to communicate therewith. Accordingly, the first gas may be introduced into the first communication channel 32 via the first gas inlet 30 and may then be introduced into the bypass unit 213 via the first bypass passage 213a. Subsequently, the first gas may flow along the interior of the bypass unit 213 and may then be introduced into the mid body 210 via the second bypass passage 213b.

The second communication channel 33 allows the first port 31 and the hollow fiber membranes 221 to communicate with each other therethrough. The second communication channel 33 may be disposed in the first cap 3. The second communication channel 33 may be formed through one end of the first cap 3. When the first cap 3 is coupled to the mid-case 21, the second communication channel 33 may be continuously connected to the first mid-case 210a so as to communicate therewith. Accordingly, the second gas may be introduced or discharged between the interior of the first cap 3 and the hollow fiber membranes 221 via the second communication channel 33 and the first mid passage 210a.

The partition portion 34 spatially separates the first communication channel 32 and the second communication channel 33 from each other. The partition portion 34 may be disposed in the first cap 3 to partition the interior of the first cap into the first communication channel 32 and the second communication channel 33. Accordingly, the partition portion 34 may prevent the first gas and the second gas from being mixed with each other in the first cap 3. Based on FIG. 10, as the first communication channel 32 is disposed above the partition portion 34 and the second communication channel 33 is disposed under the partition portion 34, the first communication channel 32 and the second communication channel 33 may be spatially separated from each other by the partition portion 34. In this case, a part of the first port 31 may be disposed across the first communication channel 32 and the partition portion 34, whereby the first port 31 may be coupled to the second communication channel 33 so as to communicate therewith.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A mid-case provided in a humidifier for fuel cells, the humidifier comprising a humidifying module configured to humidify dry gas to be supplied to a fuel cell stack using wet gas, a first cap coupled to one end of the humidifying module, and a second cap coupled to the other end of the humidifying module, the mid-case comprising:
a mid body configured to receive at least one cartridge comprising a plurality of hollow fiber membranes; and
a bypass unit configured to bypass first gas introduced through a first gas inlet of the first cap so as to flow toward the cartridge received in the mid body, wherein
the bypass unit protrudes from the mid body at a position at which the bypass unit overlaps the cartridge received in the mid body.

2. The mid-case according to claim 1, wherein a sectional area of a first mid passage formed through one end of the mid body is greater than a sectional area of a first bypass passage formed through one end of the bypass unit.

3. The mid-case according to claim 2, wherein, assuming that the sectional area of the first mid passage is 1, the sectional area of the first bypass passage is 0.1 to 0.45.

4. The mid-case according to claim 2, wherein
the bypass unit is provided with a second bypass passage communicating with an interior of the mid body, and
a sectional area of the second bypass passage is greater than the sectional area of the first bypass passage.

5. The mid-case according to claim 2, wherein
the bypass unit is provided with a second bypass passage communicating with an interior of the mid body, and
assuming that the sectional area of the first mid passage is 1, a sectional area of the second bypass passage is 0.2 to 0.8.

6. A humidifier for fuel cells, the humidifier comprising:
a humidifying module configured to humidify dry gas to be supplied to a fuel cell stack using wet gas;
a first cap coupled to one end of the humidifying module; and
a second cap coupled to the other end of the humidifying module, wherein
the humidification module comprises a mid-case having open opposite ends and at least one cartridge comprising a plurality of hollow fiber membranes,
the first cap comprises a first gas inlet configured to allow first gas to be supplied into the mid-case to be introduced therethrough and a first port communicating with the hollow fiber membranes, the first port being configured to allow second gas to be introduced or discharged therethrough,
the mid-case comprises a mid body configured to receive the cartridge and a bypass unit configured to bypass the first gas introduced through the first gas inlet so as to flow toward the cartridge received in the mid body, and
the bypass unit protrudes from the mid body at a position at which the bypass unit overlaps the cartridge received in the mid body.

7. The humidifier according to claim 6, wherein the first cap comprises:
a first communication channel configured to allow the first gas inlet and the bypass unit to communicate with each other therethrough;
a second communication channel configured to allow the first port and the hollow fiber membranes to communicate with each other therethrough; and
a partition portion configured to spatially separate the first communication channel and the second communication channel from each other.

8. The humidifier according to claim 7, wherein
the bypass unit comprises a first bypass passage communicating with the first communication channel and a second bypass passage communicating with an interior of the mid body, and
the first bypass passage and the second bypass passage are formed through the bypass unit at different positions in different directions.

9. The humidifier according to claim 6, wherein
the first cap comprises a first communication channel configured to allow the first gas inlet and the bypass unit to communicate with each other therethrough and a second communication channel configured to allow the first port and the hollow fiber membranes to communicate with each other therethrough,
the bypass unit is provided in one end thereof with a first bypass passage communicating with the first communication channel,
the mid body is provided in one end thereof with a first mid passage communicating with the second communication channel, and
a sectional area of the first mid passage is greater than a sectional area of the first bypass passage.

10. The humidifier according to claim 9, wherein, assuming that the sectional area of the first mid passage is 1, the sectional area of the first bypass passage is 0.1 to 0.45.

11. The humidifier according to claim 9, wherein
the bypass unit is provided with a second bypass passage communicating with an interior of the mid body, and
a sectional area of the second bypass passage is greater than the sectional area of the first bypass passage.

12. The humidifier according to claim 9, wherein
the bypass unit is provided with a second bypass passage communicating with an interior of the mid body, and
assuming that the sectional area of the first mid passage is 1, a sectional area of the second bypass passage is 0.2 to 0.8.

13. The humidifier according to claim 6, wherein
the mid-case comprises a first gas outlet configured to allow the first gas discharged from the cartridge to be discharged out of the mid body therethrough, and
the second cap comprises a second port communicating with the hollow fiber membranes.

14. The humidifier according to claim 13, wherein the cartridge comprises:
an inner case having the hollow fiber membranes received therein;
a second gas inlet configured to allow first gas to be introduced into the inner case therethrough; and
a second gas outlet configured to allow the first gas to be discharged from the inner case therethrough at a position spaced apart from the second gas inlet.

15. The humidifier according to claim 6, wherein the first gas inlet and the first port protrude in the same direction.
